# EUROPÄISCHE PATENTANMELDUNG

(11) **EP 2 535 753 A1**
(43) Veröffentlichungstag der Anmeldung: **19.12.2012**
(21) Anmeldenummer: 12002314.8
(22) Anmeldetag: 30.03.2012
(51) Int. Cl.: G02B 21/00, G02B 21/36, G06T 7/00

(54) **Operationsmikroskop mit Videoschnittfunktion**

(30) Priorität: 15.06.2011 DE 202011101833 U
(71) Anmelder: Möller-Wedel GmbH, 22880 Wedel (DE)
(72) Erfinder: Warnecke, Lars, 23909 Ratzeburg (DE); Fränkler, Thomas, 23562 Lübeck (DE); Lembke, Stefan, 23556 Lübeck (DE); Suthau, Tim, 21039 Hamburg (DE)
(74) Vertreter: Glawe, Delfs, Moll

(57) **Zusammenfassung**

Das Operationsmikroskop mit einer Videokamera (20) zum Aufnehmen des vergrößerten Bilds und mit einem Speicher (24) zum Speichern von mit der Videokamera (20) aufgenommenen Videosequenzen, dadurch gekennzeichnet, dass ein Schnittmodul (26) und ein Auslöseknopf (23) vorgesehen sind, und dass das Schnittmodul (26) dazu ausgelegt ist, nach einem Auslösezeitpunkt, zu dem der Auslöseknopf (23) betätigt wird, eine Videosequenz in dem Speicher (24) abzulegen, die einen vorgegebenen Zeitraum vor dem Auslösezeitpunkt umfasst.

## Beschreibung

Die Erfindung betrifft ein Operationsmikroskop mit einer Videokamera zum Aufnehmen des vergrößerten Bilds. Das Operationsmikroskop umfasst einen Speicher zum Speichern von mit der Videokamera aufgenommenen Videosequenzen. Die Erfindung betrifft außerdem ein Schnittmodul für ein solches Operationsmikroskop und ein zugehöriges Verfahren zum Betreiben eines Operationsmikroskops.

Solche Operationsmikroskope werden bei Operationen eingesetzt, um den Chirurgen ein vergrößertes Bild von dem Operationsfeld zu bieten. Um den Verlauf der Operation zu dokumentieren, kann das Bild, das der Chirurg sieht, mit der Videokamera aufgezeichnet werden. Bei normaler Videoaufzeichnung entspricht die Länge des Videos der Dauer der Operation. In solchen Videos sind häufig größere Abschnitte enthalten, in denen nichts Sehenswertes passiert. Es bedeutet dann einige Mühe, die relevanten Passagen aufzufinden. Häufig werden die Videos deswegen im Nachhinein zusammengeschnitten, so dass sie nur noch eine Abfolge der relevanten Szenen umfassen. Das nachträgliche Zusammenschneiden der Videoaufzeichnung ist zeitaufwändig.

Der Erfindung liegt die Aufgabe zu Grunde, ein Operationsmikroskop, ein Schnittmodul für ein Operationsmikroskop und ein Verfahren zum Betreiben eines Operationsmikroskops vorzustellen, die verbesserte Möglichkeiten bieten, den Verlauf einer Operation zu dokumentieren. Die Aufgabe wird gelöst mit den Merkmalen der unabhängigen Ansprüche. Vorteilhafte Ausführungsformen finden sich in den Unteransprüchen.

Erfindungsgemäß umfasst das Operationsmikroskop ein Schnittmodul und einen Auslöseknopf. Das Schnittmodul ist dazu ausgelegt, nach Betätigung des Auslöseknopfs eine Videosequenz in dem Speicher abzulegen, die einen vorgegebenen Zeitraum vor der Betätigung des Auslöseknopfs umfasst.

Die Erfindung baut auf der Erkenntnis auf, dass es während der Operation leicht zu erkennen ist, welche Phasen interessant sind zum nochmaligen Betrachten im Anschluss an die Operation und welche nicht. Es bedeutet deswegen praktisch keinen zusätzlichen Aufwand, die Auswahl der betreffenden Videosequenzen bereits während der Operation zu treffen. Allerdings können die interessanten Phasen häufig nicht im Vorhinein identifiziert werden, sondern erst nachdem sie bereits begonnen haben. Wenn der Chirurg eine interessante Phase identifiziert, kann er oder sein Assistent den Auslöseknopf betätigen. Es wird dann eine Videosequenz abgespeichert, die nicht nur die auf die Betätigung des Auslöseknopfs folgende Phase umfasst, sondern auch einen davor liegenden Zeitraum. Das Operationsmikroskop ist also so ausgelegt, dass mit geringem Aufwand Videosequenzen aufgezeichnet werden können, die nicht nur den Zeitraum umfassen, der sich an eine von dem Chirurgen für interessant gehaltene Situation anschließt, sondern aus der auch hervorgeht, wie es zu dieser Situation gekommen ist. Anhand solcher Videosequenzen lassen sich die interessanten Phasen einer Operation im Nachhinein leicht nachvollziehen.

Der vorgegebene Zeitraum, auf den sich die Videosequenz vor dem Auslösezeitpunkt erstreckt, kann fest eingestellt sein. Allerdings kann es auch von Interesse sein, die Länge des vorgegebenen Zeitraums an die Gegebenheiten anzupassen. Es kann deswegen vorgesehen sein, dass die Länge des vorgegebenen Zeitraums einstellbar ist.

Die Videosequenz umfasst vorzugsweise auch eine Zeitspanne nach dem Auslösezeitpunkt, damit nachvollzogen werden kann, wie die Operation sich nach diesem Zeitpunkt weiter entwickelt hat. Die Videosequenz kann so lange fortgesetzt werden, bis sie manuell beendet wird. Um den Chirurgen und die Assistenten nicht mit der Beendigung der Videosequenz zu behelligen, kann alternativ vorgesehen sein, dass die Videosequenz eine vorgegebene Zeitspanne nach dem Auslösezeitpunkt umfasst. Die Länge der vorgegebenen Zeitspanne kann einstellbar sein.

Regelmäßig gibt es während einer Operation nicht nur eine interessante Phase, sondern eine Mehrzahl interessanter Phasen. Es wird dann nach jedem Betätigen des Auslöseknopfs eine Videosequenz in dem Speicher abgelegt. Vorzugsweise ist das Schnittmodul so ausgelegt, dass es eine Mehrzahl von Videosequenzen automatisch zu einem Videomitschnitt zusammenfügt. Der Videomitschnitt enthält in komprimierter Form die wesentlichen Phasen der Operation.

Das Schnittmodul kann einen Pufferspeicher umfassen, in dem laufend Videobilder abgelegt werden, wenn die Videokamera in Betrieb ist. Der Pufferspeicher kann so ausgelegt sein, dass jeweils die ältesten Videobilder gelöscht werden, um Platz für neue Videobilder zu schaffen. Die Kapazität des Pufferspeichers ist vorzugsweise so bemessen, dass er alle Videobilder speichern kann, die innerhalb des vorgegebenen Zeitraums vor dem Auslösezeitpunkt aufgenommen wurden. Das Videosystem kann beispielsweise so eingerichtet sein, dass 25 Videobilder pro Sekunde aufgezeichnet werden. Erstreckt sich der vorgegebene Zeitraum vor dem Auslösezeitpunkt beispielsweise über 10 Sekunden, hat der Pufferspeicher eine Kapazität von mindestens 250 Videobildern. Nach dem Betätigen des Auslöseknopfs können die in dem Pufferspeicher zwischengespeicherten Videobilder als Videosequenz in den Speicher übertragen werden. Enthält der Pufferspeicher mehr Bilder als dauerhaft gespeichert werden sollen, kann vorgesehen sein, nur einen Teil der Bilder aus dem Pufferspeicher in den Speicher zu übertragen.

Zusätzlich zu der Videosequenz kann in dem Speicher ein Bild als Snapshot abgelegt werden, das die Videokamera im Auslösezeitpunkt aufgenommen hat. Das Bild kann eine höhere Auflösung haben als die Videobilder. Auf solchen Snapshots können Details besser dargestellt werden als in Videosequenzen. Außerdem kann ein Video in dem Speicher abgelegt werden, dass den vollständigen Verlauf der Operation zeigt.

Die Erfindung betrifft außerdem ein Schnittmodul für ein solches Operationsmikroskop. Das Schnittmodul umfasst einen Speicher, einen Videoeingang und einen Auslöseknopf und ist dazu ausgelegt, nach Betätigung des Auslöseknopfs eine Videosequenz in dem Speicher abzulegen, die einen vorgegebenen Zeitraum vor der Betätigung des Auslöseknopfs umfasst. Das Schnittmodul kann mit weiteren Merkmalen fortgebildet werden, die oben mit Bezug auf das erfindungsgemäße Operationsmikroskop beschrieben sind.

Ferner betrifft die Erfindung ein Verfahren zum Betreiben eines solchen Operationsmikroskops. Bei dem Verfahren werden mit dem Operationsmikroskop vergrößerte Bilder aufgenommen und zwischengespeichert. Nach Betätigen eines Auslöseknopfs wird eine Videosequenz in einem Speicher abgelegt, die einen vorgegebenen Zeitraum vor der Betätigung des Auslöseknopfs umfasst. Das Verfahren kann mit weiteren Merkmalen fortgebildet werden, die oben mit Bezug auf das erfindungsgemäße Operationsmikroskop und das erfindungsgemäße Schnittmodul beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: ein erfindungsgemäßes Operationsmikroskop; und

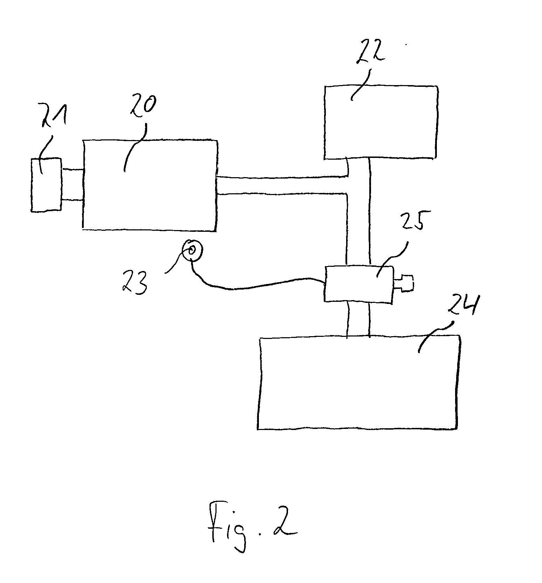

- Fig. 2:: eine schematische Darstellung eines erfindungsgemäßen Schnittmoduls.

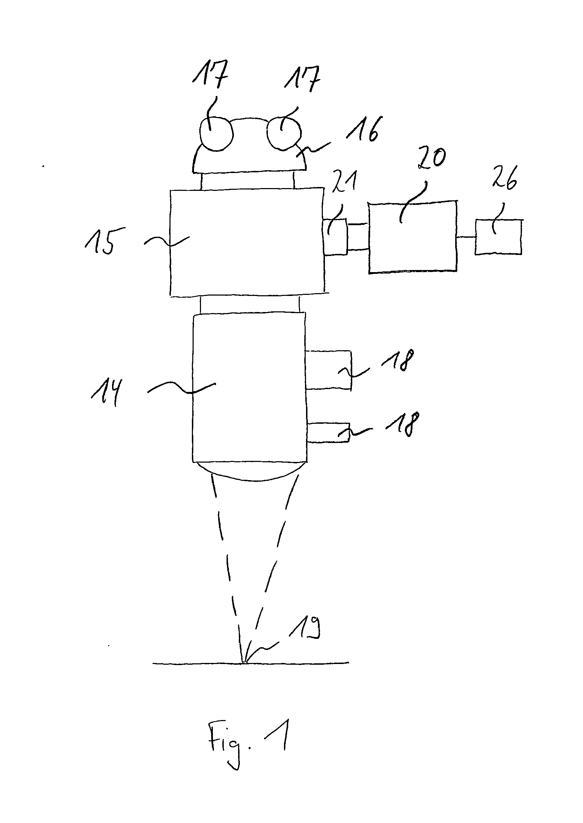

Ein Operationsmikroskop in Fig. 1 umfasst einen Mikroskopkörper 14, einen Strahlenteiler 15 und einen Einblick 16. Der stereoskopische Beobachtungsstrahlengang des Operationsmikroskops erstreckt sich von einem unterhalb des Mikroskopkörpers 14 angeordneten Objekt 19 durch den Mikroskopkörper 14 und den Strahlenteiler 15 hindurch bis zu dem Einblick 16 mit zwei Okularen 17. Ein Chirurg, der seinen Blick durch die Okulare 17 richtet, sieht ein vergrößertes Bild des Objekts 19.

In dem Mikroskopkörper 14 ist ein Vergrößerungssystem mit variablem Vergrößerungsfaktor angeordnet. Über an dem Mikroskopkörper 14 angebrachte Bedienelemente 18 kann der Vergrößerungsfaktor eingestellt werden. Die Gesamtvergrößerung des Operationsmikroskops ergibt sich aus der Vergrößerung des Vergrößerungssystems sowie einer zusätzlichen Vergrößerung, die von dem Einblick 16 beigesteuert wird.

Der Strahlenteiler 15 ist auf einer seiner seitlichen Wände mit einem optischen Anschluss 21 versehen, an den eine Videokamera 20 angeschlossen ist. In dem Strahlenteiler 15 wird ein Teil des Lichts aus dem Beobachtungsstrahlengang ausgekoppelt, um 90° umgelenkt und in Richtung des optischen Anschlusses 21 geleitet. An den optischen Anschluss 21 ist eine Videokamera 20 angeschlossen, mit der ein vergrößertes Bild von dem Objekt 19 aufgenommen werden kann. Die Videokamera 20 ist mit einem Schnittmodul 26 verbunden, das in Fig. 22 als Blockdiagramm dargestellt ist.

Während der Operation ist die Videokamera 20 permanent in Betrieb. Die mit der Videokamera 20 aufgenommenen Bilder werden in einen Pufferspeicher 22 geleitet. Der Pufferspeicher 22 hat eine Kapazität für 3000 Videobilder. Bei 25 pro Sekunde aufgenommenen Bildern reicht der Pufferspeicher also aus, um eine Videosequenz von 2 min Länge zwischenzuspeichern. Ist der Pufferspeicher voll, werden die jeweils ältesten Videobilder gelöscht,

Bemerkt der Chirurg während der Operation eine interessante Situation, kann er oder sein Assistent einen Auslöseknopf 23 betätigen. Die in dem Pufferspeicher 22 zwischengespeicherte Videosequenz wird daraufhin in einen Speicher 24 übertragen, in dem sie dauerhaft gespeichert wird. Die unmittelbar nach dem Auslösezeitpunkt aufgenommenen Videobilder werden direkt in den Speicher 24 geleitet und an die aus dem Pufferspeicher 22 übernommenen Videobilder angehängt, so dass eine durchgehende Videosequenz entsteht, die einen vorgegebenen Zeitraum vor dem Auslösezeitpunkt und eine vorgegebene Zeitspanne nach dem Auslösezeitpunkt umfasst. Parallel wird ein zum Auslösezeitpunkt aufgenommener Snapshot in dem Speicher 24 gespeichert.

Bei der nächsten interessanten Situation betätigt der Chirurg oder sein Assistent erneut den Auslöseknopf 23. Wieder werden die Videobilder aus dem Pufferspeicher 22 sowie die unmittelbar im Anschluss an den Auslösezeitpunkt aufgenommenen Videobilder in den Speicher 24 übertragen. Diese zweite Videosequenz wird direkt an die erste Videosequenz angehängt. Es entsteht auf diese Weise ein Videomitschnitt, der aus den interessanten Phasen der Operation besteht.

Nicht immer ist gewünscht, dass die aus dem Pufferspeicher 22 in den Speicher 24 übertragene Videosequenz die vollen zwei Minuten vor dem Auslösezeitpunkt umfasst. Es ist deswegen ein Einstellmodul 25 vorgesehen, mit dem die Anzahl der Bilder eingestellt werden kann, die nach dem Betätigen des Auslöseknopfs 23 aus dem Pufferspeicher 22 in den Speicher 24 übertragen wird. Aus der Anzahl der übertragenen Bilder ergibt sich zugleich der Zeitraum, den die Videosequenz vor dem Auslösezeitpunkt umfasst.

Das Einstellmodul 25 kann so eingerichtet sein, dass außerdem eine vorgegebene Zeitspanne nach dem Auslösezeitpunkt eingestellt werden kann. Die vorgegebene Zeitspanne nach dem Auslösezeitpunkt kann genauso lang sein wie der vorgegebene Zeitraum vor dem Auslösezeitpunkt, so dass der Auslösezeitpunkt genau in der Mitte der Videosequenz liegt.

## Patentansprüche

1. Operationsmikroskop mit einer Videokamera (20) zum Aufnehmen des vergrößerten Bilds und mit einem Speicher (24) zum Speichern von mit der Videokamera (20) aufgenommenen Videosequenzen, **dadurch gekennzeichnet, dass** ein Schnittmodul (26) und ein Auslöseknopf (23) vorgesehen sind, und dass das Schnittmodul (26) dazu ausgelegt ist, nach einem Auslösezeitpunkt, zu dem der Auslöseknopf (23) betätigt wird, eine Videosequenz in dem Speicher (24) abzulegen, die einen vorgegebenen Zeitraum vor dem Auslösezeitpunkt umfasst.

2. Operationsmikroskop nach Anspruch 1, **dadurch gekennzeichnet, dass** die Länge des vorgegebenen Zeitraums einstellbar ist.

3. Operationsmikroskop nach Anspruch 1 oder 2, **dadurch gekennzeichnet, dass** die Videosequenz eine vorgegebene Zeitspanne umfasst, die dem Auslösezeitpunkt nachfolgt.

4. Operationsmikroskop nach Anspruch 3, **dadurch gekennzeichnet, dass** die Länge der vorgegebenen Zeitspanne einstellbar ist.

5. Operationsmikroskop nach einem der Ansprüche 1 bis 4, **dadurch gekennzeichnet, dass** das Schnittmodul (26) dazu ausgelegt ist, eine Mehrzahl von Videosequenzen zu einem Videomitschnitt zusammenzufügen.

6. Operationsmikroskop nach einem der Ansprüche 1 bis 5, **dadurch gekennzeichnet**, **dadurch gekennzeichnet, dass** ein Pufferspeicher (22) vorgesehen ist, um die mit der Videokamera (20) aufgezeichneten Videobilder zwischenzuspeichern.

7. Operationsmikroskop nach einem der Ansprüche 1 bis 6, **dadurch gekennzeichnet, dass** das Schnittmodul (26) dazu ausgelegt ist, einen im Auslösezeitpunkt aufgenommenen Snapshot in dem Speicher (24) abzulegen.

8. Schnittmodul für ein Operationsmikroskop mit einem Speicher (24), einem Videoeingang und einem Auslöseknopf (23), wobei das Schnittmodul dazu ausgelegt ist, nach Betätigung des Auslöseknopfs (23) eine Videosequenz in dem Speicher (24) abzulegen, die einen vorgegebenen Zeitraum vor der Betätigung des Auslöseknopfs (23) umfasst.
